# EUROPEAN PATENT SPECIFICATION

(11) **EP 1 352 774 B1**
(45) Date of publication and mention of the grant of the patent: **24.01.2007**
(21) Application number: 03251479.6
(22) Date of filing: 12.03.2003
(51) Int. Cl.: B60K 37/06

(54) **Control panel**
Bedientafel
Tableau de commande

(30) Priority: 13.03.2002 GB 0205925
(43) Date of publication of application: 15.10.2003
(73) Proprietor: JOHN MCGAVIGAN LIMITED, Glasgow G64 2QR (GB)
(72) Inventor: Nisbet, George Muir, Motherwell ML1 3GD, Scotland (GB)
(74) Representative: Moreland, David

(56) References cited:
- EP-A- 0 616 345
- DE-C- 10 010 088
- GB-A- 2 208 038
- GB-A- 2 261 769

## Description

### FIELD OF INVENTION

The present invention relates to a panel having at least one control button, the button(s) being retained in association with the panel by retaining means. The invention also relates to an appliqué or foil comprising part of the panel, and to a method of forming the panel. The panel finds particular use as a control or switch panel in automotive vehicles.

### BACKGROUND TO INVENTION

Panels, such as automotive vehicle fascia panels, which carry control buttons are currently generally made by separately manufacturing the panel and the buttons, and then bringing these together in an assembly step.

Associated with this assembly procedure are a number of disadvantages. For example, providing buttons separate from the panel complicates the assembly process because several separate parts need to be brought together which can require extra equipment and process steps. Furthermore, matching the colour of the panel to the buttons can be an important quality for such panels, and this can be difficult to achieve when the panel is manufactured in a separate step to the buttons, and manual colour matching by a technician is often required.

The present invention seeks to obviate and/or mitigate one or more of the problems associated with hitherto manufactured button/panel assemblies.

DE 10010088 (GRAMMER) discloses a manufacturing method comprising casting skin (12) from a flexible coating material. A layer of foam 18 is then attached to inside of the skin and rigid bearing layer 24 to inside of the foam layer. A recess 26 in the bearing layer contains a connector 28 whose position is indicated by contouring or marking on the visible side of the skin.

EP 0616345 A1 (TEKOKU TSUSHIN KOGYO) discloses a keytop sheet of a push-button switch including a keytop, which is made of synthetic resin, molded on a sheet of resin film. The film sheet surrounding the portion thereof on which the keytop is molded is provided with a curved projection protruding in a downward and/or upward direction from the surface of the film sheet.

GB 2261769 A (SILITEK) discloses a switch comprising a switching key 1, an elastic rubber base 2 attached to the peripheral edge of the switching key 1 by a melting process, and a conductive rubber contact 3 fixed to the bottom of the switching key 1. The switch is formed by placing a solid plastics switching key 1 and a rubber sheet between a pair of dies and melting the rubber sheet to cause the rubber to flow into at least one groove in the bottom surface of the switching key 1 and form the elastic rubber base 2 with a sloping portion 200 between the switching key 1 and the elastic rubber base 2 for returning the switching key back to its original position after each press.

### SUMMARY OF INVENTION

According to a first aspect of the present invention there is provided a control or switch panel comprising a formed sheet member having a panel member and at least one button member retained in association with the panel member by at least one retaining means, the at least one button member being movable from a first position to a second position upon application of an external force, the control panel further comprising a rigid member which supports the panel member, wherein a first end of the/each retaining means and an adjacent portion of the respective button member form a first hinge member, and a second end of the/each retaining means and an adjacent portion of the panel member form a second hinge member, and wherein in the first position the first hinge member is forward of the second hinge member while in the second position the first hinge member is rearward of the second hinge member.

The at least one retaining means may bias the at least one button member forward, e.g. to the first position. Thus upon removal of the external force the button member may return to the first position or may be caused to be moved to a third position. In the latter case application of a further external force may cause the button member to move from the third position to the second position, and upon removal of the further external force the button member may return to the first position.

A further rigid member may be provided to support the/each button member.

The rigid member and further rigid members may be moulded to the panel member and to the/each button member, respectively.

The control panel may be adapted particularly for use in an automotive vehicle, e.g. as a heating/temperature/climate control panel.

The/each retaining means comprises a flexible bridge member between the first and second hinge members.

In the first position the/each flexible bridge member is disposed forward of the panel member. In the second position the/each flexible bridge member is disposed rearward of the panel member.

The button member may return to the first position upon removal of the external force. Alternatively the button member may be caused to remain in the second position or move to a third position upon removal of the external force until application of a further external force causes the button to return to the first position.

Preferably the retaining means comprise at least two web or bridge portions.

Preferably at least a portion of the at least one button, the retaining means and at least a portion of the panel are integrally formed.

Preferably when said button is in said first position a first boundary of attachment of the button member to at least part of the retaining means is forward of a second boundary of attachment of the at least part of the retaining means to the panel. Preferably also when said button is in said second position the second boundary is forward of the first boundary.

Preferably the web or bridge portions are substantially equidistantly spaced around the at least one button.

In a preferred embodiment three web portions are provided, preferably circumferentially and substantially equally spaced around the at least one button with corresponding apertures therebetween.

At least two button members may be provided.

The panel may comprise a control panel, e.g. a fascia, e.g. for use as a control panel for an automotive vehicle e.g. of a ventilation, air conditioning and/or climate control system.

The panel may be formed at least in part by injection moulding, e.g. one or multi-shot, e.g. most advantageously two shot injection moulding.

The control panel may be made from any suitable plastic or formable material. Typically a thermoplastic material is used. The plastic material may be polycarbonate (PC).

Advantageously, the plastic material may include a suitable material to impart elasticity thereto, e.g., polybutyleneterephthalate (PBT) which may be used in an amount of at least about 20%. This advantageously provides elasticity of the web or bridge portions. One or more layers may further be provided comprised of polyurethane.

The retaining means may bias the at least one button member to the first position, the button member being movable to the second position upon application of an external force, wherein the retaining means comprise at least two web or bridge portions substantially equidistantly spaced around the at least one button member.

According to a second subject of the present invention there is provided a panel carrying at least one control button, the at least one button being retained in association with the panel by retaining means, and wherein the retaining means bias the at least one button to a first position, the button being moveable to a second position upon application of an external force, wherein, when said button is in said first position a first boundary of attachment of the button member adjacent to at least part of the retaining means is forward of a second boundary of attachment of the at least part of the retaining means adjacent to the panel, and wherein when said button is in said second position the first boundary is rearward of the second boundary.

According to a third aspect of the present invention there is provided a method of forming a control or switch panel comprising the steps of:
providing a sheet form member;
forming the sheet form member to provide a panel member and at least one button member retained in association with the panel member by at least one retaining means, wherein the at least one button member is movable from a first position to a second position upon application of an external force, wherein a first end of the/each retaining means and an adjacent portion of the respective button member form a first hinge member (25), a second end of the/each retaining means and an adjacent portion of the panel member form a second hinge member (30), and wherein in the first position the first hinge member is forward of the second hinge member while in the second position the first hinge member is rearward of the second hinge member
providing a rigid member to support the panel member.

The method may comprise the additional step of providing a further rigid member(s)to support the/each button member.

The additional step may be carried out simultaneously with the step of providing the rigid member.

The rigid member and further rigid members may be formed by moulding to the panel member and the/each button member, respectively.

According to a fourth aspect of the present invention there is provided an appliqué or foil for use in a control or switch panel, the appliqué or foil comprising a formed sheet member having a panel member and at least one button member retained in association with the panel member by at least one retaining means, the at least one button member being movable from a first position to a second position upon application of an external force, wherein a first end of the/each retaining means and an adjacent portion of the respective button member form a first hinge member (25), a second end of the/each retaining means and an adjacent portion of the panel member form a second hinge member (30), and wherein in the first position the first hinge member is forward of the second hinge member while in the second position the first hinge member is rearward of the second hinge member.

According to a fifth aspect of the present invention there is provided an appliqué or foil for use in a control or switch panel according to the first aspect of the present invention.

The appliqué or foil may comprise an outermost surface of the panel, the retaining means and an outermost portion of the at least one button member.

The appliqué or foil may be formed integrally in one piece, and may be formed from any suitable plastic or formable material such as the thermoplastic material, e.g. polycarbonate. The appliqué or foil may be any suitable thickness, preferably around 125µm to 500µm thick.

According to a sixth aspect of the present invention there is provided an apparatus including a control or switch panel according to the first aspect of the present invention, or an appliqué or foil according to the fourth or fifth aspects of the present invention.

The apparatus may be selected from one of: an automotive vehicle, e.g., an automobile; an electrical appliance, e.g., white goods such as a washing machine, tumble dryer or microwave oven; audio/video equipment, e.g. television, video recorder, digital video disk player/recorder or the like, particularly automotive audio equipment such as a radio, cassette and/or CD player or a combination thereof.

### BRIEF DESCRIPTION OF DRAWINGS

An embodiment of the present invention will now be described by way of example only, and with reference to the accompanying drawings which are:
Figure 1 a front face view of an appliqué or foil carrying two control buttons in accordance with an embodiment of the present invention;
Figure 2 a front side view of a portion of the appliqué or foil of Figure 1 showing one button;
Figure 3(a) a first cross-sectional side view of the button of Figure 2 in a first position;
Figure 3(b) a second cross-sectional side view of the button of Figure 2 showing a portion of a retaining means which attaches the button member to a panel member;
Figure 4 a cross-sectional side view of the button of Figure 2 in a second position;
Figure 5 a back or rear face view of the appliqué or foil of Figure 1;
Figure 6 a perspective view from the front and to one side of a control panel including the appliqué or foil of Figure 1 in accordance with an embodiment of the present invention;
Figure 7 a front face view of the control panel of Figure 6; and
Figure 8 a back or rear face view of the control panel of Figure 6.

### DETAILED DESCRIPTION OF DRAWINGS

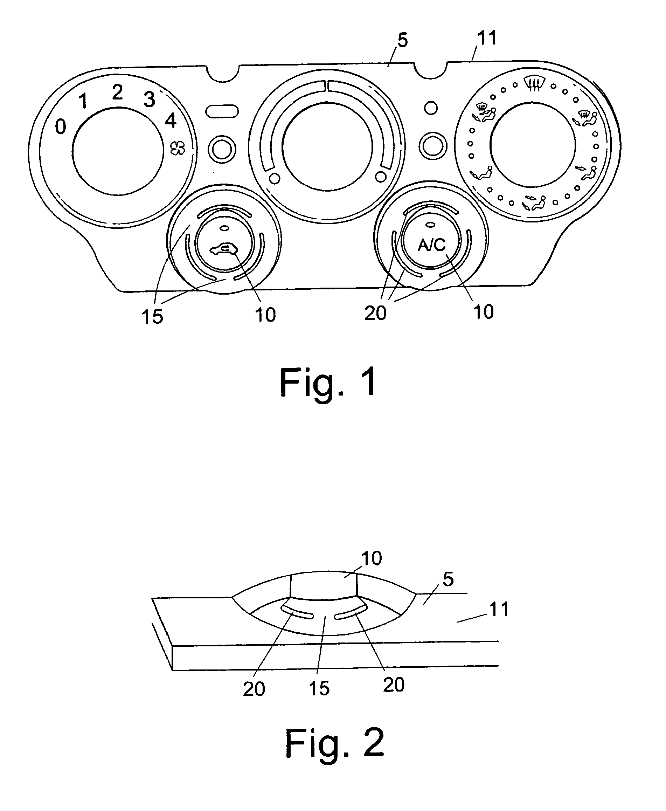

With reference initially to Figure 1, there is shown a sheet form member, appliqué or foil 5 according to an embodiment of the present invention. In this embodiment the appliqué 5 carries a variety of graphics and is adapted for use in an automotive vehicle ventilation, air conditioning or climate control panel. The appliqué 5 has two control button members 10, each of which is retained in association with a panel member 11 by retaining means 15 in the form of webs or bridges. Three equally spaced retaining means 15 are provided for each button member 10. The retaining means 15 are interspaced by three apertures 20. The appliqué 5 comprising the panel member 11, button members 10 and retaining means 15 is formed integrally in one piece.

Figure 2 shows a different elevation of the appliqué 5 of Figure 1, and shows button member 10 in a first, rest position when no external force is applied to the button member 10. Two of the apertures 20 and one of the retaining means 15 can also be seen.

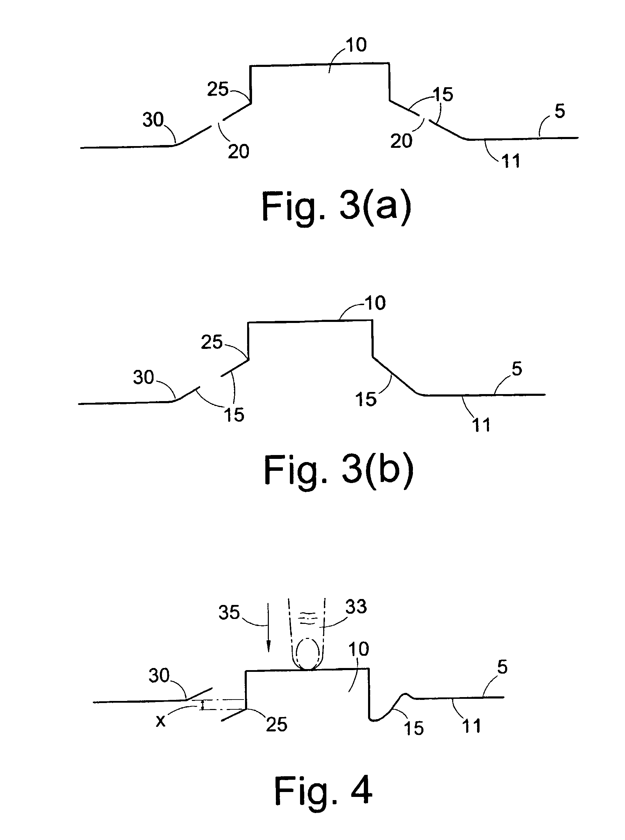

Figure 3(a) shows button member 10 and retaining means 15 together with apertures 20 in the first, rest position when no external force is applied. Also clearly indicated is a first boundary 25 of attachment of the button member 10 to the retaining means 15, and a second boundary of attachment 30 of the retaining means 15 to the panel member 11, which boundaries act as first and second hinges, respectively. The first boundary 25 is forward of the second boundary 30 in the first position.

Figure 3(b) shows button member 10 of Figure 3(a) in a different orientation clearly showing the attachment of the button member 10 to the panel member 11 by the retaining means 15.

Figure 4 shows the button member 10 in a second, depressed position by application of an external force by indicated finger 33 in direction of arrow 35. This view clearly shows the second boundary of attachment 30 is forward of the first boundary of attachment 25 by an amount "x" in the second position.

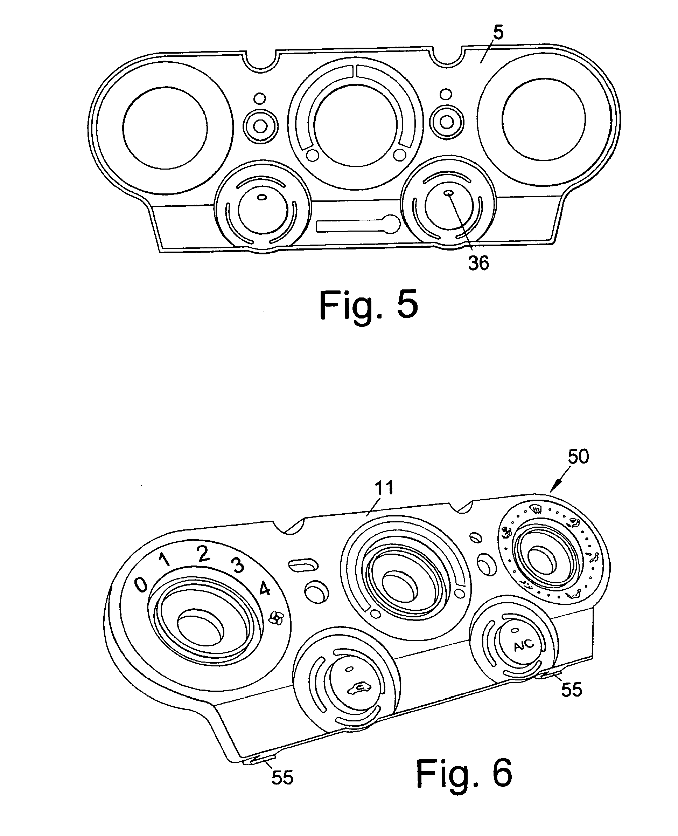

Referring now to Figure 5, a back or rear portion of the appliqué 5 can be seen, the surface of which has been printed with various inks to provide the required graphics effects seen, e.g. dial markings. Also, button members 10 may include window portions 36 to allow illumination of button member 10, in use. The appliqué 5 shown here can be formed from a suitable formable and pointable thermoplastic, e.g. polycarbonate, and can be injection moulded with any suitable material such as a thermoplastic material to provide a panel 50 in accordance with the present invention.

A panel 50 in accordance with an embodiment of the present invention is shown in Figures 6, 7 and 8 in front perspective view, front and rear views respectively.

Substantially rigid injection moulded plastic backing portion 55 can be clearly seen which together with the appliqué 5 form the panel 50.

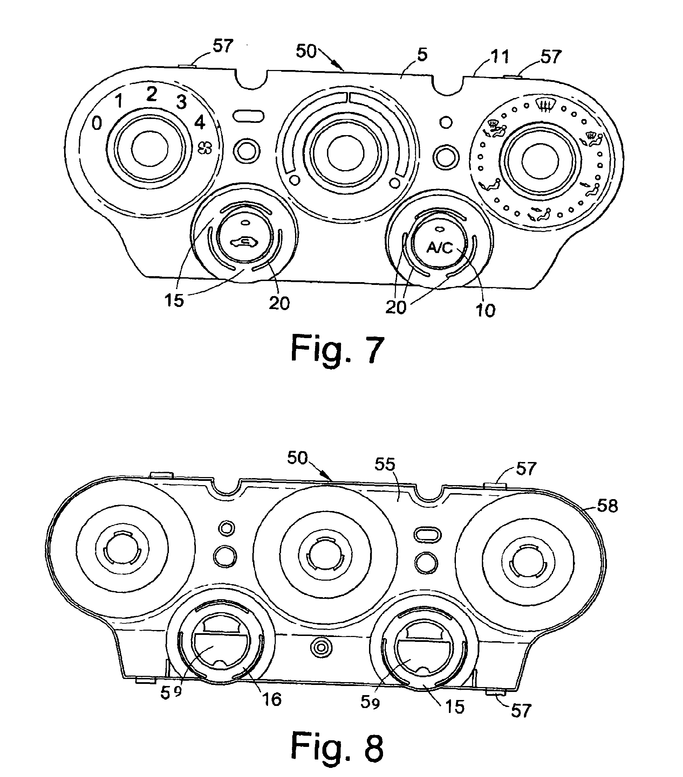

Figure 8 shows only the plastic backing portion 55 which has been injection moulded to the panel member 11. Further shown are the retaining means 15 and a circumferential portion 16 of the button members 10. Clip components 57 formed by injection moulding for mounting the panel 50, e.g. to an automotive vehicle facia, are indicated. The clips 57 are carried upon a peripheral skirt 58 extending from the backing portion 55. Also shown is the back face of the button members 10 which include further substantially rigid injection moulded plastic backing portions 59 within each button member 10.

The injection moulding can be achieved by use of polycarbonate plastic polymer, and in this example a so-called two shot injection moulding operation can be used.

A typical process for the manufacture of a control panel such as that shown in Figures 6, 7 and 8 is as follows.

The incorporation of an actuation button member 10 with tactile feedback on a one-piece panel/appliqué 5 can be achieved as follows:
(a) On base material comprising a sheet form member required graphics are printed either through a silk screen process or other processes, i.e. digitally, litho, etc. The sheet form member or substrate film material can be a polycarbonate film, Bayfol film material, GE zylex or any other formable material. The paints or advantageously inks used are compatible with the sheet form member, e.g. are polycarbonate based.
(b) The printed sheet form member material is then thermoformed to the required shape to form a part, accommodating the 3D shape of the panel plus the required button or buttons. The forming process can be applied into individual panels or to a set of panels simultaneously. The forming process used in this embodiment is a high pressure thermoforming process where the material is pre-heated to near its glass transition temperature and then positioned above a forming dye which has the required shape and features. Finally a high pressure is applied above the substrate, which conforms to the required shape. Other thermoforming process can be used such as: match metal forming process, vacuum forming and hydro-forming process.
(c) The 3D shaped part is then cut into individual appliqués. At this stage the tactility or actuation pressure of individual button members can be altered by changing the size of the apertures at the base of the button member. This area is retaining the button members as part of the panel. Therefore there is a limitation on the size of the aperture.
(d) The next stage of the process is where the part is injected with plastic polycarbonate and becomes rigid. The injection process can be single shot or two shot injection. The two shot injection process is used when there are areas within the panel, which do not require illumination or require to be shielded. After the completion of this stage and the removal of a sprue a one piece panel 50 with a relevant high height buttons (e.g. approximately 5mm) is manufactured.

It will be appreciated that the embodiments of the present invention hereinbefore described are given by way of example only, and that various modifications may be made without departing from the scope of the invention. It will be appreciated that the thickness and breadth of the web or bridge portions may define an actuation force of the button. It will further be appreciated that a length of the web or bridge portions will define the button travel between the first and second positions.

It is expected that buttons according to the present invention are likely to have a lifetime of approximately one million cycles before the memory of the web or bridge portion relating to the biased first position fails.

## Claims

1. A control or switch panel (50) comprising a formed sheet member (5) having a panel member (11) and at least one button member (10) retained in association with the panel member by at least one retaining means (15), the at least one button member being movable from a first position to a second position upon application of an external force, the control or switch panel further comprising a rigid member (55) which supports the panel member, wherein a first end of the/each retaining means and an adjacent portion of the respective button member form a first hinge member (25), a second end of the/each retaining means and an adjacent portion of the panel member form a second hinge member (30), and wherein in the first position the first hinge member is forward of the second hinge member while in the second position the first hinge member is rearward of the second hinge member.

2. A control or switch panel as claimed in claim 1, wherein the at least one retaining means bias the at least one button member forward to the first position, and upon removal of the external force the button member returns to the first position or is caused to be moved to a third position, and in the latter case application of a further external force causes the button member to move from the third position to the second position, and upon removal of the further external force the button member returns to the first position.

3. A control or switch panel as claimed in either of claims 1 or 2, wherein a further rigid member (59) is provided to support the/each button member.

4. A control or switch panel as claimed in any of claims 1 to 3, wherein the rigid member and/or further rigid members are moulded to the panel member and the/each button member, respectively.

5. A control or switch panel as claimed in any of claims 1 to 4, wherein the control panel is adapted for use in an automotive vehicle, such as a heating, temperature, air conditioning or climate control panel thereof.

6. A control or switch panel as claimed in any of claims 1 or 5, wherein the/each retaining means comprises a flexible bridge member between the first and second hinge members.

7. A control or switch panel as claimed in claim 6, wherein in the first position the/each flexible bridge member is disposed forward of the panel member, and in the second position the/each flexible bridge member is disposed rearward of the panel member.

8. A control or switch panel as claimed in claim 1, wherein the button member returns to the first position upon removal of the external force.

9. A control or switch panel as claimed in claim 1, wherein the button member remains in the second position or moves to a third position upon removal of the external force until application of a further external force causes the button member to return to the first position.

10. A control or switch panel as claimed in claim 1 or either of claims 8 or 9, wherein the retaining means comprise at least two web or bridge portions.

11. A control or switch panel as claimed in claim 1 or any of claims 8 to 10, wherein at least a portion of the at least one button member, the retaining means and at least a portion of the panel are integrally formed.

12. A control or switch panel as claimed in claim 1 or any of claims 8 to 11, wherein when said button member is in said first position a first boundary of attachment (25) of the button member to at least part of the retaining means is forward of a second boundary of attachment (30) of the at least part of the retaining means to the panel.

13. A control or switch panel as claimed in claim 12, wherein when said button member is in said second position the second boundary is forward of the first boundary.

14. A control or switch panel as claimed in any of claims 10 to 13, wherein the web portions are substantially equidistantly spaced around the at least one button member.

15. A control or switch panel as claimed in any of claims 10 to 14, wherein three web portions are provided which are circumferentially and substantially equally spaced around the at least one button with corresponding apertures therebetween.

16. A control or switch panel as claimed in claim 1 or any of claims 8 to 15, wherein at least two button members are provided.

17. A control or switch panel as claimed in any of claims 8 to 16, wherein the panel comprises a control panel, such as a fascia or switch control panel for an automotive vehicle, particularly a ventilation, air conditioning or climate control system thereof.

18. A control or switch panel as claimed in claim 1 or any of claims 8 to 17, wherein the panel is formed at least in part by injection moulding, such as a one or multi-shot, and particularly a two shot injection moulding.

19. A control or switch panel as claimed in claim 1 or any of claims 8 to 18, wherein the control panel is made from any suitable plastic or formable material.

20. A control or switch panel as claimed in claim 19, wherein the material is a thermoplastic material.

21. A control or switch panel as claimed in either of claims 19 to 20, wherein the plastic material is polycarbonate (PC).

22. A control or switch panel as claimed in any of claims 19 to 21, wherein the plastic material includes a suitable material to impart elasticity thereto, such as polybutylene-terephthalate (PBT) which is used in an amount of at least 20%.

23. A control or switch panel as claimed in claim 1 or any of claims 8 to 22, wherein one or more layers are further provided which comprise polyurethane.

24. A control or switch panel (50) as claimed in claim 1, wherein the retaining means bias the at least one button member to the first position, the button member being moveable to the second position upon application of an external force, wherein the retaining means comprise at least two web or bridge portions substantially equidistantly spaced around the at least one button member.

25. A panel (50) carrying at least one control button (10), the at least one button being retained in association with the panel by retaining means (15), and wherein the retaining means bias the at least one button to a first position, the button being moveable to a second position upon application of an external force, wherein, when said button is in said first position a first boundary of attachment (25) of the button member adjacent to at least part of the retaining means is forward of a second boundary of attachment (30) of the at least part of the retaining means adjacent to the panel, and wherein when said button is in said second position the first boundary is rearward of the second boundary.

26. A method of forming a control or switch panel (50) according to any of claims 1 to 24, the method comprising the steps of:
providing a sheet form member (5);
forming the sheet form member to provide a panel member (11) and at least one button member (10) retained in association with the panel member by at least one retaining means (15), wherein the at least one button member is movable from a first position to a second position upon application of an external force, wherein a first end of the/each retaining means and an adjacent portion of the respective button member form a first hinge member (25), a second end of the/each retaining means and an adjacent portion of the panel member form a second hinge member (30), and wherein in the first position the first hinge member is forward of the second hinge member while in the second position the first hinge member is rearward of the second hinge member,
providing a rigid member (55) to support the panel member.

27. A method as claimed in claim 26, wherein the method comprises the additional step of providing a further rigid member (59) to support the/each button member.

28. A method as claimed in claim 27, wherein the additional step is carried out simultaneously with the step of providing the rigid member.

29. A method as claimed in any of claims 26 to 28, wherein the rigid member and optionally further rigid member(s) are formed by moulding to the panel member or the/each button member, respectively.

30. An appliqué or foil (15) for use in a control or switch panel (50) according to any of claims 1 to 24, the appliqué or foil comprising a formed sheet member having a panel member (11) and at least one button member (10) retained in association with the panel member by at least one retaining means (15), the at least one button member being movable from a first position to a second position upon application of an external force, wherein a first end of the/each retaining means and an adjacent portion of the respective button member form a first hinge member (25), a second end of the/each retaining means and an adjacent portion of the panel member form a second hinge member (30), and wherein in the first position the first hinge member is forward of the second hinge member while in the second position the first hinge member is rearward of the second hinge member.

31. An appliqué (5) for use in a control or switch panel (50) according to any of claims 1 to 24.

32. An appliqué as claimed in claim 31, wherein the appliqué comprises an outermost surface of the panel, the retaining means and an outermost portion of at the least one button member.

33. An appliqué as claimed in either of claims 31 or 32, wherein the appliqué is formed integrally in one piece, and is formed from a plastics material or other formable material such as a thermoplastic material, such as polycarbonate.

34. An appliqué as claimed in any of claims 31 to 33, wherein the appliqué has a thickness of 125µm to 500µm.

35. An apparatus including a control or switch panel according to claims 1 to 24, an appliqué or foil according to claim 30, or an appliqué according to claim 30 or claims 31 to 34.

36. An apparatus as claimed in claim 35, wherein the apparatus is selected from one of an automotive vehicle or an electrical appliance.

## Patentansprüche

1. Bedien- oder Schalttafel (50), die ein geformtes flächiges Element (5) umfasst, das ein Tafelelement (11) und wenigstens ein Tastenelement (10) hat, das von wenigstens einem Haltemittel (15) in Assoziation mit dem Tafelelement gehalten wird, wobei das wenigstens eine Tastenelement auf Ausüben einer externen Kraft hin von einer ersten Position in eine zweite Position bewegt werden kann, wobei die Bedien- oder Schalttafel ferner ein starres Element (55) umfasst, das das Plattenelement unterstützt, wobei ein erstes Ende des/jedes Haltemittels und ein benachbarter Teil des jeweiligen Tastenelements ein erstes Gelenkelement (25) bilden, ein zweites Ende des/jedes Haltemittels und ein benachbarter Teil des Plattenelements ein zweites Gelenkelement (30) bilden und in der ersten Position das erste Gelenkelement vor dem zweiten Gelenkelement ist, während das erste Gelenkelement in der zweiten Position rückwärts vom zweiten Gelenkelement ist.

2. Bedien- oder Schalttafel nach Anspruch 1, bei der das wenigstens eine Haltemittel das wenigstens eine Tastenelement vorwärts auf die erste Position vorspannt und das Tastenelement auf Aufheben der externen Kraft hin in die erste Position zurückkehrt oder zum Bewegen in eine dritte Position veranlasst wird und im letzteren Fall das Ausüben einer weiteren externen Kraft verursacht, dass das Tastenelement sich von der dritten Position in die zweite Position bewegt, und das Tastenelement auf Aufheben der weiteren externen Kraft hin in die erste Position zurückkehrt.

3. Bedien- oder Schalttafel nach Anspruch 1 oder 2, bei der ein weiteres starres Element (59) zum Unterstützen des/jedes Tastenelements bereitgestellt ist.

4. Bedien- oder Schalttafel nach einem der Ansprüche 1 bis 3, bei der das starre Element und/oder weitere starre Elemente an das Plattenelement bzw. das/jedes Tastenelement angeformt ist/sind.

5. Bedien- oder Schalttafel nach einem der Ansprüche 1 bis 4, wobei die Bedientafel zur Verwendung in einem Kraftfahrzeug ausgeführt ist, wie eine Heizungs-, Temperatur-, Klimaanlagen- oder Klimabedientafel davon.

6. Bedien- oder Schalttafel nach einem der Ansprüche 1 bis 5, bei der das/jedes Haltemittel ein flexibles Brückenelement zwischen den ersten und zweiten Gelenkelementen umfasst.

7. Bedien- oder Schalttafel nach Anspruch 6, bei der in der ersten Position das/jedes flexible Brückenelement vor dem Plattenelement angeordnet ist und in der zweiten Position das/jedes flexible Brückenelement rückwärts vom Plattenelement angeordnet ist.

8. Bedien- oder Schalttafel nach Anspruch 1, bei der das Tastenelement auf das Aufheben der externen Kraft hin in die erste Position zurückkehrt.

9. Bedien- oder Schalttafel nach Anspruch 1, bei der das Tastenelement auf das Aufheben der externen Kraft hin in der zweiten Position bleibt oder sich in eine dritte Position bewegt, bis das Ausüben einer weiteren externen Kraft verursacht, dass das Tastenelement in die erste Position zurückkehrt.

10. Bedien- oder Schalttafel nach Anspruch 1 oder einem der Ansprüche 8 oder 9, bei der die Haltemittel wenigstens zwei Steg- oder Brückenabschnitte umfassen.

11. Bedien- oder Schalttafel nach Anspruch 1 oder einem der Ansprüche 8 bis 10, bei der wenigstens ein Teil des wenigstens einen Tastenelements, die Haltemittel und wenigstens ein Teil der Tafel einstückig ausgebildet sind.

12. Bedien- oder Schalttafel nach Anspruch 1 oder einem der Ansprüche 8 bis 11, bei der, wenn das genannte Tastenelement in der ersten Position ist, ein erster Rand der Anbringung (25) des Tastenelements an wenigstens einem Teil der Haltemittel sich vor einem zweiten Rand der Anbringung (30) des wenigstens einen Teils der Haltemittel an der Tafel befindet.

13. Bedien- oder Schalttafel nach Anspruch 12, bei der sich der zweite Rand vor dem ersten Rand befindet, wenn das Tastenelement in der zweiten Position ist.

14. Bedien- oder Schalttafel nach einem der Ansprüche 10 bis 13, bei der die Stegabschnitte im Wesentlichen gleichmäßig voneinander beabstandet um das wenigstens eine Tastenelement herum angeordnet sind.

15. Bedien- oder Schalttafel nach einem der Ansprüche 10 bis 14, bei der drei Stegabschnitte bereitgestellt sind, die in Umfangsrichtung und im Wesentlichen gleichmäßig voneinander beabstandet um die wenigstens eine Taste herum angeordnet sind mit entsprechenden Öffnungen dazwischen.

16. Bedien- oder Schalttafel nach Anspruch 1 oder einem der Ansprüche 8 bis 15, bei der wenigstens zwei Tastenelemente bereitgestellt sind.

17. Bedien- oder Schalttafel nach einem der Ansprüche 8 bis 16, wobei die Tafel eine Bedientafel wie z.B. eine Instrumenten- oder Schalterbedientafel für ein Kraftfahrzeug umfasst, insbesondere ein Lüftungs-, Klimaanlagen- oder Klimasteuerungssystem davon.

18. Bedien- oder Schalttafel nach Anspruch 1 oder einem der Ansprüche 8 bis 17, wobei die Tafel wenigstens teilweise durch Spritzgießen, wie z.B. ein Ein- oder Mehrkomponenten- und insbesondere ein Zwei-Komponenten-Spritzgießen, hergestellt ist.

19. Bedien- oder Schalttafel nach Anspruch 1 oder einem der Ansprüche 8 bis 18, wobei die Bedientafel aus einem beliebigen geeigneten Kunststoff- oder formbaren Material hergestellt ist.

20. Bedien- oder Schalttafel nach Anspruch 19, bei der das Material ein thermoplastisches Material ist.

21. Bedien- oder Schalttafel nach einem der Ansprüche 19 bis 20, bei der das Kunststoffmaterial Polycarbonat (PC) ist.

22. Bedien- oder Schalttafel nach einem der Ansprüche 19 bis 21, bei der das Kunststoffmaterial ein geeignetes Material aufweist, um ihm Elastizität zu verleihen, wie z.B. Polybutylenterephthalat (PBT), das in einer Menge von wenigstens 20 % verwendet wird.

23. Bedien- oder Schalttafel nach Anspruch 1 oder einem der Ansprüche 8 bis 22, bei der ferner eine oder mehrere Schichten bereitgestellt sind, die Polyurethan umfassen.

24. Bedien- oder Schalttafel (50) nach Anspruch 1, bei der die Haltemittel das wenigstens eine Tastenelement in die erste Position vorspannen, wobei das Tastenelement auf Ausüben einer externen Kraft hin in die zweite Position bewegt werden kann, wobei die Haltemittel wenigstens zwei Steg- oder Brückenabschnitte umfassen, die im Wesentlichen gleichmäßig voneinander beabstandet um das wenigstens eine Tastenelement herum angeordnet sind.

25. Tafel (50), die wenigstens eine Bedientaste (10) trägt, wobei die wenigstens eine Taste von Haltemitteln (15) in Assoziation mit der Platte gehalten wird und wobei die Haltemittel die wenigstens eine Taste in eine erste Position vorspannen, wobei die Taste auf Ausüben einer externen Kraft hin in die zweite Position bewegt werden kann, wobei, wenn die Taste in der ersten Position ist, ein erster Rand der Anbringung (25) des Tastenelements neben wenigstens einem Teil der Haltemittel sich vor einem zweiten Rand der Anbringung (30) des wenigstens einen Teils der Haltemittel neben der Tafel befindet und wobei, wenn die Taste in der zweiten Position ist, der erste Rand sich hinter dem zweiten Rand befindet.

26. Verfahren zum Herstellen einer Bedien- oder Schalttafel (50) nach einem der Ansprüche 1 bis 24, wobei das Verfahren die folgenden Schritte umfasst:
Bereitstellen eines flächigen Formelements (5);
Formen des flächigen Formelements zum Bereitstellen eines Tafelelements (11) und wenigstens eines Tastenelements (10), das von wenigstens einem Haltemittel (15) in Assoziation mit dem Tafelelement gehalten wird, wobei das wenigstens eine Tastenelement auf Ausüben einer externen Kraft hin von einer ersten Position in eine zweite Position bewegt werden kann, wobei ein erstes Ende des/jedes Haltemittels und ein benachbarter Teil des jeweiligen Tastenelements ein erstes Gelenkelement (25) bilden, ein zweites Ende des/jedes Haltemittels und ein benachbarter Teil des Plattenelements ein zweites Gelenkelement (30) bilden und das erste Gelenkelement in der ersten Position vor dem zweiten Gelenkelement ist, während das erste Gelenkelement in der zweiten Position rückwärts vom zweiten Gelenkelement ist;
Bereitstellen eines starren Elements (55) zum Unterstützen des Tafelelements.

27. Verfahren nach Anspruch 26, bei dem das Verfahren den zusätzlichen Schritt des Bereitstellens eines weiteren starren Elements (59) zum Unterstützen des/jedes Tastenelements umfasst.

28. Verfahren nach Anspruch 27, bei dem der zusätzliche Schritt gleichzeitig mit dem das starre Element bereitstellenden Schritt durchgeführt wird.

29. Verfahren nach einem der Ansprüche 26 bis 28, bei dem das starre Element und fakultativ (ein) weitere(s) Element(e) durch Anformen an das Tafelelement bzw. das/jedes Tastenelement hergestellt werden.

30. Anwendungsfläche oder Folie (15) zur Verwendung in einer Bedien- oder Schalttafel (50) nach einem der Ansprüche 1 bis 24, wobei die Anwendungsfläche oder Folie ein geformtes flächiges Element umfasst, das ein Tafelelement (11) und wenigstens ein Tastenelement (10) hat, das von wenigstens einem Haltemittel (15) in Assoziation mit dem Tafelelement gehalten wird, wobei das wenigstens eine Tastenelement auf Ausüben einer externen Kraft hin von einer ersten Position in eine zweite Position bewegt werden kann, wobei ein erstes Ende des/jedes Haltemittels und ein benachbarter Teil des jeweiligen Tastenelements ein erstes Gelenkelement (25) bilden, ein zweites Ende des/jedes Haltemittels und ein benachbarter Teil des Plattenelements ein zweites Gelenkelement (30) bilden und wobei das erste Gelenkelement in der ersten Position vor dem zweiten Gelenkelement ist, während das erste Gelenkelement in der zweiten Position rückwärts vom zweiten Gelenkelement ist.

31. Anwendungsfläche (5) zur Verwendung in einer Bedien- oder Schalttafel (50) nach einem der Ansprüche 1 bis 24.

32. Anwendungsfläche nach Anspruch 31, wobei die Anwendungsfläche eine äußerste Oberfläche der Tafel, die Haltemittel und einen äußersten Teil von dem wenigstens einen Tastenelement umfasst.

33. Anwendungsfläche nach einem der Ansprüche 31 oder 32, wobei die Anwendungsfläche einteilig einstückig ausgebildet ist und aus einem Kunststoffmaterial oder einem anderen formbaren Material wie einem thermoplastischen Material, wie z.B. Polycarbonat, hergestellt ist.

34. Anwendungsfläche nach einem der Ansprüche 31 bis 33, wobei die Bedienfläche eine Dicke von 125 µm bis 500 µm hat.

35. Vorrichtung mit einer Bedien- oder Schalttafel nach Ansprüchen 1 bis 24, einer Anwendungsfläche oder Folie nach Anspruch 30 oder einer Anwendungsfläche nach Anspruch 30 oder Ansprüchen 31 bis 34.

36. Vorrichtung nach Anspruch 35, wobei die Vorrichtung ausgewählt ist aus einem Kraftfahrzeug oder einem Elektrogerät.

## Revendications

1. Panneau de commande ou de commutation (50) comprenant un élément en feuille formé (5) comportant un élément de panneau (11) et au moins un élément de bouton (10) retenu sur l'élément de panneau par au moins un moyen de retenue (15), l'au moins un moyen de bouton pouvant être déplacé d'une première position vers une deuxième position lors de l'application d'une force externe, le panneau de commande ou de commutation comprenant en outre un élément rigide (55) supportant l'élément de panneau, une première extrémité du/de chaque élément de retenue et une partie adjacente de l'élément de bouton respectif formant un premier élément de charnière (25), une deuxième extrémité du/de chaque élément de retenue et une partie adjacente de l'élément de panneau formant un deuxième élément de charnière (30), le premier élément de charnière étant agencé dans la première position vers l'avant du deuxième élément de charnière, le premier élément de charnière étant agencé vers l'arrière du deuxième élément de charnière dans la deuxième position.

2. Panneau de commande ou de commutation selon la revendication 1, dans lequel l'au moins un moyen de retenue pousse l'au moins un élément de bouton vers l'avant vers la première position, l'élément de bouton retournant vers la première position ou étant déplacé vers une troisième position lors de la suppression de la force externe, l'application d'une force externe additionnelle entraînant dans ce dernier cas le déplacement de l'élément de bouton de la troisième position vers la deuxième position, l'élément de bouton étant ramené vers la première position lors de la suppression de la force externe additionnelle.

3. Panneau de commande ou de commutation selon les revendications 1 ou 2, dans lequel un élément rigide additionnel (59) est fourni pour supporter le/chaque élément de bouton.

4. Panneau de commande ou de commutation selon l'une quelconque des revendications 1 à 3, dans lequel l'élément rigide et/ou les éléments rigides additionnels sont respectivement moulés sur l'élément de panneau et le/chaque élément de bouton.

5. Panneau de commande ou de commutation selon l'une quelconque des revendications 1 à 4, dans lequel le panneau de commande est adapté pour être utilisé dans un véhicule automobile, par exemple sous forme d'un panneau de commande du chauffage, de la température, du conditionnement d'air ou de la climatisation.

6. Panneau de commande ou de commutation selon l'une quelconque des revendications 1 ou 5, dans lequel le /chaque moyen de retenue comprend un élément de liaison flexible entre les premier et deuxième éléments de charnière.

7. Panneau de commande ou de commutation selon la revendication 6, dans lequel le/chaque élément de liaison flexible et agencé vers l'avant de l'élément de panneau dans la première position, le/chaque élément de liaison flexible étant agencé vers l'arrière de l'élément de panneau dans la deuxième position.

8. Panneau de commande ou de commutation selon la revendication 1, dans lequel l'élément de bouton retourne vers la première position lors de la suppression de la force externe.

9. Panneau de commande ou de commutation selon la revendication 1, dans lequel l'élément de bouton reste dans la deuxième position ou se déplace vers une troisième position lors de la suppression de la force externe jusqu'à ce que l'application d'une force externe additionnelle entraîne le retour de l'élément de bouton vers la première position.

10. Panneau de commande ou de commutation selon la revendication 1 ou selon l'une des revendications 8 ou 9, dans lequel les moyens de retenue comprennent au moins deux parties de bande ou de liaison.

11. Panneau de commande ou de commutation selon la revendication 1 ou selon l'une quelconque des revendications 8 à 10, dans lequel au moins une partie du au moins un élément de bouton, l'élément de retenue et au moins une partie du panneau sont formés d'une seule pièce.

12. Panneau de commande ou de commutation selon la revendication 1 ou selon l'une quelconque des revendications 8 à 11, dans lequel une première limite de fixation (25) de l'élément de bouton sur au moins une partie du moyen de retenue se situe vers l'avant d'une deuxième limite de fixation (30) de l'au moins une partie du moyen de retenue sur le panneau lorsque ledit élément de bouton se trouve dans ladite première position.

13. Panneau de commande ou de commutation selon la revendication 12, dans lequel ladite deuxième limite se situe vers l'avant de la première limite lorsque ledit élément de bouton se trouve dans ladite deuxième position.

14. Panneau de commande ou de commutation selon l'une quelconque des revendications 10 à 13, dans lequel les parties de bande sont espacées de distances pratiquement égales autour du au moins un élément de bouton.

15. Panneau de commande ou de commutation selon l'une quelconque des revendications 10 à 14, dans lequel trois parties de bande sont espacées circonférentiellement et de distances pratiquement égales autour du au moins un bouton, des ouvertures correspondantes étant agencées entre elles.

16. Panneau de commande ou de commutation selon la revendication 1 ou l'une quelconque des revendications 8 à 15, comportant au moins deux éléments de bouton.

17. Panneau de commande ou de commutation selon l'une quelconque des revendications 8 à 16, dans lequel le panneau comprend un panneau de commande, par exemple un carénage frontal ou un panneau de commande de commutateurs pour un véhicule automobile, en particulier un système de ventilation, de conditionnement d'air ou de climatisation correspondant.

18. Panneau de commande ou de commutation selon la revendication 1 ou l'une quelconque des revendications 8 à 17, dans lequel le panneau est formé au moins en partie par moulage par injection, par exemple par moulage en une seule fois ou en plusieurs fois, en particulier par moulage par injection en deux fois.

19. Panneau de commande ou de commutation selon la revendication 1 ou l'une quelconque des revendications 8 à 18, dans lequel le panneau est formé à partir d'un quelconque plastique ou d'un matériau à formage approprié.

20. Panneau de commande ou de commutation selon la revendication 19, dans lequel le matériau est un matériau thermoplastique.

21. Panneau de commande ou de commutation selon l'une des revendications 19 ou 20, dans lequel le matériau plastique est du polycarbonate (PC).

22. Panneau de commande ou de commutation selon l'une quelconque des revendications 19 à 21, dans lequel le matériau plastique englobe un matériau approprié pour lui conférer de l'élasticité, par exemple du téréphtalate de polybutylène ("PBT), utilisé dans une quantité représentant au moins 20%.

23. Panneau de commande ou de commutation selon la revendication 1 ou l'une quelconque des revendications 8 à 22, comportant en outre une ou plusieurs couches comprenant du polyuréthane.

24. Panneau de commande ou de commutation (50) selon la revendication 1, dans lequel le moyen de retenue pousse l'au moins un élément de bouton vers la première position, l'élément de bouton pouvant être déplacé vers la deuxième position lors de l'application d'une force externe, les moyens de retenue comprenant au moins deux parties de bande ou de liaison espacées de distances pratiquement égales autour du au moins un élément de bouton.

25. Panneau (50) supportant au moins un bouton de commande (10), l'au moins un bouton étant retenu sur le panneau par des moyens de retenue (15), les moyens de retenue poussant l'au moins un bouton vers une première position, le bouton pouvant être déplacé vers une deuxième position lors de l'application d'une force externe, une première limite de fixation (25) de l'élément de bouton adjacente à au moins une partie des moyens de retenue étant située vers l'avant d'une deuxième limite de fixation (30) de l'au moins une partie des moyens de retenue adjacente au panneau lorsque ledit bouton se trouve dans ladite première position, la première limite se situant vers l'arrière de la deuxième limite lorsque ledit bouton se trouve dans ladite deuxième position.

26. Procédé de formation d'un panneau de commande ou de commutation (50) selon l'une quelconque des revendications 1 à 24, le procédé comprenant les étapes ci-dessous:
fourniture d'un élément en feuille formé (5);
formage de l'élément en feuille formé pour fournir un élément de panneau (11) et au moins un élément de bouton (10) retenu sur l'élément de panneau par au moins un élément de retenue (15), l'au moins un élément de bouton pouvant être déplacé d'une première position vers une deuxième position lors de l'application d'une force externe, une première extrémité du/de chaque moyen de retenue et une partie adjacente de l'élément de bouton respectif formant un premier élément de charnière (25), une deuxième extrémité du/de chaque moyen de retenue et une partie adjacente de l'élément de panneau formant un deuxième élément de charnière (30), le premier élément de charnière étant agencé vers l'avant du deuxième élément de charnière dans la première position et le premier élément de charnière étant situé vers l'arrière du deuxième élément de charnière dans la deuxième position;
fourniture d'un moyen rigide (55) pour supporter l'élément de panneau.

27. Procédé selon la revendication 26, le procédé comprenant l'étape additionnelle de fourniture d'un élément rigide additionnel (59) pour supporter le/chaque élément de bouton.

28. Procédé selon la revendication 27, dans lequel l'étape additionnelle est effectuée de manière simultanée à l'étape de fourniture de l'élément rigide.

29. Procédé selon l'une quelconque des revendications 26 à 28, dans lequel l'élément rigide et l'élément (les éléments) rigide(s) additionnel(s) optionnel(s) est (sont) formé(s) respectivement par moulage sur l'élément de panneau et le/chaque élément de bouton.

30. Revêtement d'application ou film (15) destiné à être utilisé dans un panneau de commande ou de commutation (50) selon l'une quelconque des revendications 1 à 24, le revêtement d'application ou le film comprenant un élément en feuille formé comportant un élément de panneau (11) et au moins un élément de bouton (10) retenu sur l'élément de panneau par au moins un moyen de retenue (15), l'au moins un élément de bouton pouvant être déplacé d'une première position vers une deuxième position lors de l'application d'une force externe, une première extrémité du/de chaque moyen de retenue et une partie adjacente de l'élément de bouton respectif formant un premier élément de charnière (25), une deuxième extrémité du/de chaque moyen de retenue et une partie adjacente de l'élément de panneau formant un deuxième élément de charnière (30), le premier élément de charnière étant agencé vers l'avant du deuxième élément de charnière dans la première position et le premier élément de charnière étant agencé vers l'arrière du deuxième élément de charnière dans la deuxième position.

31. Revêtement d'application (5) destiné à être utilisé sur un panneau de commande ou de commutation (50) selon l'une quelconque des revendications 1 à 24.

32. Revêtement d'application selon la revendication 31, le revêtement d'application comprenant une surface externe extrême du panneau, les moyens de retenue et une partie externe extrême du au moins un élément de bouton.

33. Revêtement d'application selon l'une des revendications 31 ou 32, dans lequel le revêtement d'application est formé intégralement d'une seule pièce, à partir d'un matériau plastique ou d'un autre matériau à formage, par exemple un matériau thermoplastique, par exemple un polycarbonate.

34. Revêtement d'application selon l'une quelconque des revendications 31 à 33, dans lequel le revêtement d'application a une épaisseur comprise entretenue 125 µm et 500 µm.

35. Dispositif englobant un panneau de commande ou de commutation selon les revendications 1 à 24, un revêtement d'application ou un film selon la revendication 30, ou un revêtement d'application selon la revendication 30 ou les revendications 31 à 34.

36. Dispositif selon la revendication 35, le dispositif étant sélectionné parmi un véhicule automobile ou un dispositif électrique.
